# EUROPÄISCHE PATENTSCHRIFT

(11) **EP 0 504 099 B1**
(45) Veröffentlichungstag und Bekanntmachung des Hinweises auf die Patenterteilung: **26.07.1995**
(21) Anmeldenummer: 92810111.2
(22) Anmeldetag: 18.02.1992
(51) Int. Cl.: B01D 3/08, B01L 3/00, F16L 27/08

(54) **Dichtungseinrichtung für einen Rotationsverdampfer**
Sealing arrangement for rotary evaporators
Dispositif d'étanchéité pour un évaporateur rotatif

(30) Priorität: 15.03.1991 CH 803/91
(43) Veröffentlichungstag der Anmeldung: 16.09.1992
(73) Patentinhaber: Büchi Labortechnik AG, CH-9230 Flawil (CH)
(72) Erfinder: Spring, Arthur, CH-9230 Flawil (CH)
(74) Vertreter: Hepp, Dieter

(56) Entgegenhaltungen:
- DE-A- 3 641 152

## Beschreibung

Die Erfindung bezieht sich auf eine Dichtungseinrichtung für einen Rotationsverdampfer mit einem rotierenden Verdampfergefäss, das durch eine Dampfdurchführungs-Anordnung mit einem feststehenden Kühler verbunden ist. Derartige Rotationsverdampfer sind in Vielzahl bekannt und gebräuchlich. So zeigt z.B. die DE-A-25 34 446 einen Rotationsverdampfer mit einem Dampfdurchführungs-Rohr zur Durchleitung des Dampfes durch eine Halte- und Antriebseinrichtung, wobei eine Wellendichtung mit einer Dichtlippe wie ein Abstreifring am Dampfdurchführungs-Rohr angreift.

In der DE-A-31 14 449 ist ein Dampfdurchführungs-Rohr mit einer als Zwischenstück ausgebildeten Dichtung vorgesehen.

Obwohl sich derartige Anordnungen in der Praxis bewährt haben, lassen Sie sich hinsichtlich Manipulationssicherheit, Dichtigkeit und vor allem auch Dauerhaftigkeit des Dichtsystems verbessern.

Aufgabe der Erfindung ist es, die Nachteile des Bekannten zu vermeiden, insbesondere also eine Dichtungseinrichtung für einen Rotationsverdampfer zu schaffen, die verschleissarm, einfach in der Montage, kostengünstig und betriebssicher ist.

Diese Aufgabe wird erfindungsgemäss insbesondere gemäss Kennzeichen der Patentansprüche gelöst.

Durch die wenigstens zweiteilige Ausbildung der Dampfdurchführungs-Anordnung wird auf einfachste Weise erreicht, dass die Dichtfläche in den inneren Bereich der Antriebseinrichtung verschoben wird, so dass die Gefahr eines Verkantens und damit von Undichtigkeiten reduziert wird. Ausserdem lassen sich durch die zweiteilige Ausbildung der Anordnung im Hinblick auf Gleit- und Dichtungseigenschaften optimale Materialien für die beiden System-Teile kombinieren. Besonders einfach kann die Dichtpartie dabei gestaltet werden, wenn die Stirnseiten der Teile selbst als Dichtflächen ausgebildet sind. Die Dichtflächen können dabei entsprechend den Anforderungen geformt sein; besonders einfach lassen sie sich herstellen, wenn sie radial und unter einem Winkel von 90° zur Achse der Dampfdurchführungs-Anordnung verlaufen.

Bei der zweiteiligen Anordnung entsteht nur eine Dichtfläche. Selbstverständlich ist es auch denkbar bei entsprechender Vorgabe die Anordnung mehrteilig, z.B. dreiteilig zu machen.

Im Hinblick auf Verschleissfestigkeit und Widerstandsfähigkeit gegenüber aggressiven Medien haben sich dabei System-Teile aus einem Keramik- oder Glas- Werkstoff besonders bewährt. Die Stirn- bzw. Dichtflächen derartiger Teile lassen sich hinsichtlich Rauhigkeit und Oberflächengenauigkeit optimal ausbilden.

Besonders vorteilhaft lässt sich die Erfindung realisieren, wenn eines der Teile aus einem Keramik-Werkstoff und das andere Teil aus einem weicheren Werkstoff besteht.

Dabei haben sich Kunststoff-Werkstoffe, insbesondere PTFE bzw. PTFE Compound besonders bewährt.

Zur weiteren Verbesserung der Gleiteigenschaften der Dichtungspartie hat es sich bewährt, wenn der Kunststoffwerkstoff einen Füllstoff enthält. Vorzugsweise wird dabei PTFE mit einem Füllstoff aus Glas, Hochleistungskunststoff oder Kohle bzw. Kohlenstoff eingesetzt. Als Hochleistungskunststoffe sind dabei bekannte Kunststoffe mit hoher thermischer Beständigkeit (über 300° C) und/oder hoher Lösungsmittelbeständigkeit (z.B. gegen Aceton, Toluol, Nitro, Alkohole oder Essigsäure) zu verstehen.
Dabei hat sich ein Füllstoffgehalt von 5-30%, insbesondere von etwa 15% besonders bewährt.

Besonders gute Ergebnisse lassen sich erzielen, wenn das Keramikmaterial aus Aluminiumoxid oder aus Siliziumkarbid besteht.

Besonders gute Dicht- und Verschleisseigenschaften ergeben sich, wenn wenigstens eine der Dichtflächen der Systemteile eine Oberflächenrauhigkeit von weniger als Ra = 0,3» aufweist.

Die Erfindung ist im folgenden in Ausführungsbeispielen anhand der Zeichnungen näher erläutert. Es zeigen:
Figur 1 die schematische Darstellung eines Rotationsverdampfers und
Figur 2 ein Ausführungsbeispiel einer Dichtungseinrichtung mit den Merkmalen der Erfindung.

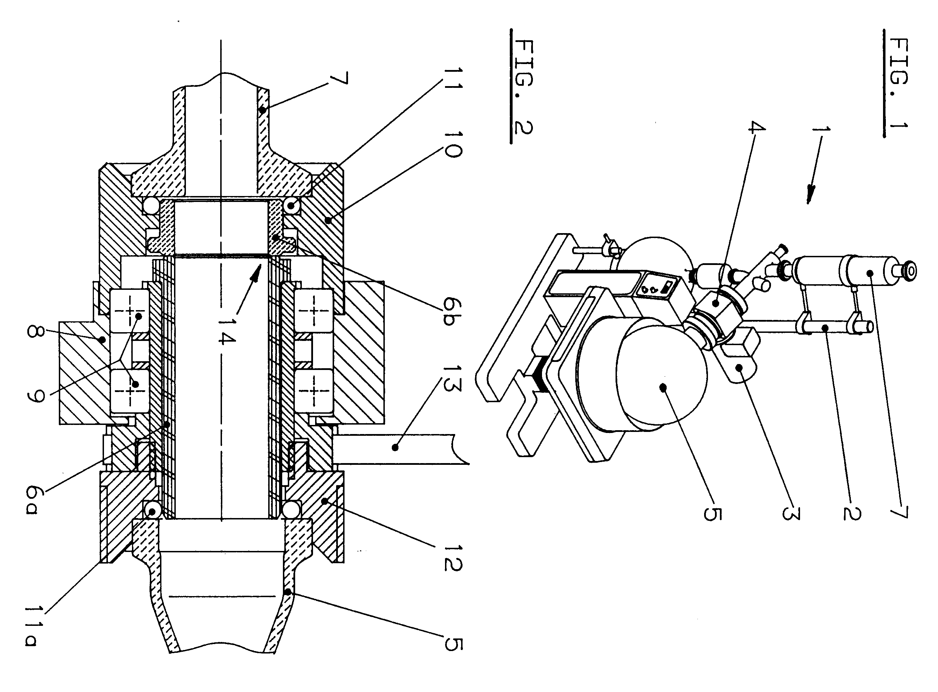

Gemäss Figur 1 weist ein Rotationsverdampfer 1 ein Stativ-Teil 2 auf, auf welchem ein Motor 3 befestigt ist, der über ein Antriebs- und Getriebe-Teil 4 einen Verdampferkolben 5 antreibt. Durch das Antriebs-Teil 4 verläuft als Dampfdurchführungsanordung ein Dampfdurchführungs-Rohr 6 (Figur 2), durch welches der vom Kolben 5 aufsteigende Dampf in einen Kühler 7 geleitet wird. Der Kühler 7 ist dabei in bekannter Weise stationär auf der Antriebseinrichtung 4 befestigt.

Gemäss Figur 2 weist das Antriebs-Teil 4 einen rohrförmigen Mantel 8 auf, in welchem das Dampfdurchführungs-Rohr 6 gelagert ist. Dabei besteht das Rohr 6 aus zwei Rohr-Teilen 6a und 6b. Das Rohrteil 6a ist dabei mittels Kugellagern 9 im Mantel 8 gelagert und das Rohrteil 6b ist über ein Zwischenstück 10 fest mit dem Mantel 8 verbunden, d.h. also dass es stationär zusammen mit dem Kühler 7 durch das Antriebs-Teil 4 gehalten wird. Eine Dichtung 11 dichtet den Kühler 7 gegen das Teil 6b ab.

Anderseits ist das Rohr-Teil 6a mittels einer Dichtung 11a und eines Verbindungsstücks 12 mit dem Kolben 5 verbunden und rotiert mit diesem. Der Antrieb erfolgt dabei über einen schematisch angedeuteten Riemen 13.

Die beiden Rohr-Teile 6a, 6b liegen stirnseitig im Bereich 14 dichtend aneinander an. Das Rohr-Teil 6a besteht dabei aus gefülltem Polytetrafluoräthylen (PTFE). Die Oberfläche des Rohr-Teils 6a im Bereich der Dichtfläche 14 weist eine Rauhigkeit von < Ra = 1,6 » auf.

Das Teil 6b besteht aus einem Keramik-Werkstoff, nämlich Aluminiumoxid B40 der Feldmühle Aktiengesellschaft, D-7310 Plochingen.

Die Oberfläche des Teils 6b im Dichtbereich 14 weist eine Rauhigkeit von < Ra = 0,5 » auf. Diese Rauhigkeit lässt sich durch Schleifen erreichen.

In der praktischen Anwendung lassen sich selbstverständlich noch andere Keramik-Werkstoffe wie z.B. Zirkonoxid, Siliziumkarbid einsetzen. Auch ist es denkbar, beide Teile 6a und 6b aus Keramik-Werkstoff herzustellen. Wesentlich ist dabei die absolut plane Ausbildung der Dichtfläche sowie eine Oberflächenbearbeitung, die niedrige Rauhigkeit und damit geringen Verschleiss und gute Dichteigenschaften gewährleistet.

Statt PTFE lassen sich auch andere Kunststoff-Materialien, wie insbesondere FEP, PFA, PCTFE, PPS, PPO oder Kohle/Graphit verwenden.

Beim Ausführungsbeispiel ist das Rohr-Teil 6a vor allem wegen der Lagerung mittels zwei Kugellagern 9 länger ausgebildet, als das Rohr-Teil 6b. Je nach Anwendungsfall können selbstverständlich beide Teile gleich, kürzer oder länger ausgebildet werden.

## Patentansprüche

1. Dichtungseinrichtung an einem Rotationsverdampfer mit einem rotierenden Verdampfergefäss (5) das durch eine Dampfdurchführungs-Anordnung (6) mit einem feststehenden Kühler (7) verbunden ist, sowie einem Antriebs-Teil (4) für das Verdampfergefäss (5), dadurch gekennzeichnet, dass die Dampfdurchführungs-Anordnung aus wenigstens zwei rohrförmig oder ringförmig ausgebildeten Teilen (6a, 6b) besteht, die innerhalb des Antriebs-Teils (4) angeordnet sind, wobei der kühlerseitige Teil (6b) stationär und der verdampferseitige Teil (6a) mit dem Verdampfergefäss (5) rotierend angeordnet ist, und dass die beiden Teile (6a, 6b) koaxial nebeneinander angeordnet und stirnseitig durch einander gegenüberliegende Dichtflächen miteinander verbunden sind und eine Rotationsdichtung (14) bilden.

2. Dichtungseinrichtung nach Anspruch 1 , dadurch gekennzeichnet, dass die Teile (6a, 6b) aus zwei verschiedenen Materialien bestehen.

3. Dichtungseinrichtung nach Anspruch 2, dadurch gekennzeichnet, dass eines der Teile (6a) aus Kunststoff- und/oder Kohle-, bzw. Graphit-Material besteht.

4. Dichtungseinrichtung nach Anspruch 2 oder 3, dadurch gekennzeichnet, dass wenigstens eines der Teile (6a, 6b) aus Keramik- oder Glas- Werkstoff besteht.

5. Dichtungseinrichtung nach Anspruch 3, dadurch gekennzeichnet, dass der Kunststoff ein PTFE-Werkstoff, insbesondere ein PTFE-Compound oder Teflon ist.

6. Dichtungseinrichtung nach Anspruch 5, dadurch gekennzeichnet, dass der PTFE-Werkstoff als Füllstoff Glas, andere Hochleistungskunststoffe oder Kohle- bzw. Kohlenstoff-Arten enthält.

7. Dichtungseinrichtung nach Anspruch 6, dadurch gekennzeichnet, dass der Füllstoff-Anteil 5% bis 30%, vorzugsweise 15% G (Gewichtsprozent) beträgt.

8. Dichtungseinrichtung nach einem der vorangegangenen Ansprüche, dadurch gekennzeichnet, dass das Keramik-Material aus Aluminiumoxid besteht.

9. Dichtungseinrichtung nach einem der vorangegangenen Ansprüche, dadurch gekennzeichnet, dass das Keramik-Material aus Siliziumkarbid, Zirkonoxid besteht.

10. Dichtungseinrichtung nach einem der vorangegangenen Ansprüche, dadurch gekennzeichnet, dass wenigstens eine der Dichtflächen eine Oberflächenrauhigkeit von weniger als Ra = 0,3 » aufweist.

11. Verwendung eines als Rohr oder Ring ausgebildeten Keramik-Teils als Dichtelement für die Dampfdurchführungs-Anordnung eines Rotationsverdampfers, die in einem Antriebsteil angeordnet ist, bei welchem Karamik-Teil wenigstens eine Stirnfläche als Dichtfläche ausgebildet ist, welche mit der Stirnfläche eines zweiten Rohrs gleitend und dichtend zusammenwirkt.

12. Verwendung nach Anspruch 11 mit einer Paarung eines Keramik-Teils und eines Kunststoff-Teils.

13. Verwendung nach Anspruch 12 mit einem Kunststoff-Teil mit einem Füllstoff enthaltend Glas, und/oder andere Hochleistungskunststoffe und/oder Kohle- bzw. Kohlenstoff-Arten.

14. Verwendung nach Anspruch 13 mit einem Füllstoff-Gewichtsanteil von 5% bis 30% Gewichtsprozent, vorzugsweise von 15% G (Gewichtsprozent).

## Claims

1. A sealing arrangement on a rotary evaporator having a rotating evaporator vessel (5) which is connected through a vapour transfer arrangement (6) to a stationary cooler (7), and a drive portion (4) for the evaporator vessel (5), characterised in that the vapour transfer arrangement comprises at least two portions (6a, 6b) which are of a tubular or annular configuration and which are arranged within the drive portion (4), wherein the portion (6b) on the cooler side is stationary and the portion (6a) on the evaporator side is arranged to rotate with the evaporator vessel (5), and that the two portions (6a, 6b) are arranged in coaxial side-by-side relationship and are connected together at the ends by mutually oppositely disposed sealing surfaces and form a rotary sealing means (14).

2. A sealing arrangement according to claim 1 characterised in that the portions (6a, 6b) comprise two different materials

3. A sealing arrangement according to claim 2 characterised in that one of the portions (6a) comprises plastics material and/or carbon or graphite material.

4. A sealing arrangement according to claim 2 or claim 3 characterised in that at least one of the portions (6a, 6b) comprises ceramic or glass material.

5. A sealing arrangement according to claim 3 characterised in that the plastics material is a PTFE-material, in particular a PTFE-compound or Teflon.

6. A sealing arrangement according to claim 5 characterised in that as a filler the PTFE-material contains glass, other high-performance plastics materials or kinds of carbon or carbon materials.

7. A sealing arrangement according to claim 6 characterised in that the proportion of filler is from 5% to 30%, preferably 15% wt (percent by weight).

8. A sealing arrangement according to one of the preceding claims characterised in that the ceramic material comprises aluminium oxide.

9. A sealing arrangement according to one of the preceding claims characterised in that the ceramic material comprises silicon carbide or zirconium oxide.

10. A sealing arrangement according to one of the preceding claims characterised in that at least one of the sealing surfaces has a surface roughness of less than Ra = 0.3 ».

11. Use of a ceramic portion in the form of a tube or ring as a sealing element for the vapour transfer arrangement of a rotary evaporator, which vapour transfer arrangement is disposed in a drive portion, in which ceramic portion at least one end face is in the form of a sealing face which slidingly and sealingly co-operates with the end face of a second tube.

12. A use according to claim 11 with a pairing of a ceramic portion and a plastics material portion.

13. A use according to claim 12 with a plastics portion with a filler containing glass and/or other high-performance plastics materials and/or kinds of carbon or carbon material.

14. A use according to claim 13 with a proportion by weight of filler of from 5% to 30% by weight, preferably 15% by wt (percent by weight).

## Revendications

1. Dispositif d'étanchéité sur un évaporateur rotatif comprenant un récipient évaporateur rotatif (5) qui est relié par un dispositif de passage de vapeur (6) à un refroidisseur fixe (7), et un élément d'entraînement (4) pour le récipient évaporateur (5), caractérisé en ce que le dispositif de passage de vapeur se compose d'au moins deux éléments (6a, 6b) de forme tubulaire ou annulaire qui sont disposés à l'intérieur de l'élément d'entraînement (4), l'élément (6b) situé côté refroidisseur étant stationnaire tandis que l'élément (6a) situé côté évaporateur tourne avec le récipient évaporateur (5), et en ce que les deux éléments (6a, 6b) sont juxtaposés coaxialement, sont reliés entre eux, sur leur face frontale, par des surfaces d'étanchéité se faisant face, et forment un joint d'étanchéité rotatif (14).

2. Dispositif d'étanchéité selon la revendication 1, caractérisé en ce que les éléments (6a, 6b) se composent de deux matériaux différents.

3. Dispositif d'étanchéité selon la revendication 2, caractérisé en ce que l'un des éléments (6a) se compose de matière plastique et/ou de matériau à base de charbon ou de graphite.

4. Dispositif d'étanchéité selon la revendication 2 ou 3, caractérisé en ce que l'un au moins des éléments (6a, 6b) se compose d'une matière céramique ou en verre.

5. Dispositif d'étanchéité selon la revendication 3, caractérisé en ce que la matière plastique est une matière PTFE, notamment un composé PTFE ou du téflon.

6. Dispositif d'étanchéité selon la revendication 5, caractérisé en ce que la matière PTFE contient, comme charge, du verre, d'autres matières plastiques à haute performance ou des types de charbon ou de carbone.

7. Dispositif d'étanchéité selon la revendication 6, caractérisé en ce que la proportion de charge est de 5 % à 30 %, de préférence de 15 % en poids.

8. Dispositif d'étanchéité selon l'une des revendications précédentes, caractérisé en ce que le matériau céramique se compose d'oxyde d'aluminium.

9. Dispositif d'étanchéité selon l'une des revendications précédentes, caractérisé en ce que le matériau céramique se compose de carbure de silicium, d'oxyde de zircone.

10. Dispositif d'étanchéité selon l'une des revendications précédentes, caractérisé en ce que l'une au moins des surfaces d'étanchéité présente une rugosité superficielle inférieure à Ra = 0,3 ».

11. Utilisation d'un élément en céramique en forme de tube ou d'anneau comme élément d'étanchéité pour le dispositif de passage de vapeur, disposé dans un élément d'entraînement, d'un évaporateur rotatif, l'une au moins des surfaces frontales de l'élément en céramique étant conçue comme une surface d'étanchéité qui coopère avec la surface frontale d'un second tube pour glisser et réaliser l'étanchéité.

12. Utilisation selon la revendication 11 avec une combinaison formée d'un élément en céramique et d'un élément en matière plastique.

13. Utilisation selon la revendication 12 avec un élément en matière plastique formé d'une charge contenant du verre et/ou d'autres matières plastiques à haute performance et/ou des types de charbon ou de carbone.

14. Utilisation selon la revendication 13 avec une proportion de charge de 5 % à 30 % en poids, de préférence de 15 % en poids.
